# EUROPÄISCHE PATENTSCHRIFT

(11) **EP 4 450 366 B1**
(45) Veröffentlichungstag und Bekanntmachung des Hinweises auf die Patenterteilung: **22.10.2025**
(21) Anmeldenummer: 24162402.2
(22) Anmeldetag: 08.03.2024
(51) Int. Cl.: B61L 29/30, B61L 23/04, G01S 17/88, G01S 17/42

(54) **SYSTEM ZUR ÜBERWACHUNG EINES BAHNÜBERGANGS**
SYSTEM FOR MONITORING A LEVEL CROSSING
SYSTÈME DE SURVEILLANCE D'UN PASSAGE À NIVEAU

(30) Priorität: 20.04.2023 DE 102023110100
(43) Veröffentlichungstag der Anmeldung: 23.10.2024
(73) Patentinhaber: SICK AG, 79183 Waldkirch (DE)
(72) Erfinder: Schütt, Christian, Menznau (CH); Dietrich, Urs, Kenzingen (DE)

(56) Entgegenhaltungen:
- DE-B4- 102007 060 303
- JP-A- 2003 011 824

## Beschreibung

Die Erfindung betrifft ein System zur Überwachung eines Bahnübergangs nach dem Oberbegriff des Anspruchs 1.

Zur Überwachung von flächenförmigen Bereichen werden häufig Laserscanner eingesetzt. Ein von einem Laser erzeugter Lichtstrahl wird über eine Lichtablenkeinheit in einen Sichtbereich gelenkt und dort von einem gegebenenfalls vorhandenen Objekt reflektiert oder remittiert. Das reflektierte bzw. remittierte Licht gelangt wieder zurück zu der Laserscaneinheit und wird dort von einem Empfänger detektiert. Die Lichtablenkeinheit ist in der Regel schwenkbar bzw. drehbar ausgestaltet, so dass der von dem Laser erzeugte Lichtstrahl ein durch die Drehbewegung erzeugtes Sichtfeld überstreicht. Wird ein vom Empfänger empfangenes reflektiertes Lichtsignal aus dem Sichtbereich empfangen, so kann aus der Winkelstellung der Ablenkeinheit auf die Winkellage des Objektes im Sichtbereich geschlossen werden. Wird zusätzlich die Laufzeit von zum Beispiel pulsförmigem Laserlicht überwacht, kann aus der Laufzeit unter Verwendung der Lichtgeschwindigkeit auch auf die Entfernung des Objektes vom Laserscanner und damit auf den Ort des Objekts im Sichtbereich geschlossen werden. Werden weiterhin zweidimensionale Schutzfelder im Sichtbereich definiert, so kann auf diese Weise eine Verletzung der Schutzfelder durch den Laserscanner vollständig überwacht werden. Befindet sich ein unzulässiges Objekt im Schutzfeld, so kann von der Empfängereinheit ein entsprechendes Sicherheitssignal, z.B. ein Warn- oder Steuersignal, ausgegeben werden. Derartige Laserscanner sind zum Beispiel in DE 4340756C2 beschrieben. Die Auswertung von Schutzfeldern dieser Laserscanner ist beispielsweise in EP 0967492A1 und EP 0520247A2 ausgeführt.

Solche Laserscanner werden auch in gattungsgemäßen Systemen zur Überwachung eines Bahnübergangs eingesetzt, wie in der DE102007060303B4, JP2003011824A oder DE202012101250U1 offenbart.

Ein solches System muss fehlersicher ausgelegt sein und deshalb hohe Sicherheitsanforderungen erfüllen, um das sogenannte Performance Level d (PLd) bzw. Safety Integrity Level 3 (SIL3) zu erreichen. Bisher wurde solche Sicherheit unter anderem dadurch erreicht, dass der eingesetzte Laserscanner ein Sicherheitslaserscanner ist, wie beispielsweise der aus der DE4340 756A1 bekannte und der die entsprechenden Normen, wie EN13849 für Maschinensicherheit und EN61496 für berührungslos wirkende Schutzeinrichtungen (BWS) erfüllt. Zur Erfüllung dieser Sicherheitsnormen sind im Laserscanner eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe und/oder Vorsehen von einzelnen Testzielen mit definierten Reflexionsgraden, die unter den entsprechenden Scanwinkeln erkannt werden müssen. Diese Sicherheitsmaßnahmen gelten umso mehr bei einem Einsatz im Außenbereich (Outdoor) mit den negativen Umwelteinflüssen, wie Nebel, Regen und Schnee.

Es gibt das Erfordernis, auch Bahnübergänge oder sonstige Bereiche im Bahnbetrieb im Outdoor-Bereich mit Sicherungssystemen, die das Performance Level d (PLd) bzw. Safety Integrity Level 3 (SIL3) erfüllen, abzusichern. Bei Bahnübergängen sollen z.B. Autos sicher erkannt werden, bevor die Zugfreigabe erfolgt. Oder es sollen Weichenbereiche so abgesichert werden, dass keine Weiche verstellt werden kann, solange sich ein Zug darauf befindet (ansonsten Entgleisung mit erheblichen, auch personellen, Folgeschäden).

Vereinzelt sind dazu, wie oben genannt, Systeme mit Laserscannern im Einsatz, die aber als Gesamtsystem für keinerlei PL- bzw. SIL-Level ausgewiesen sind. Lediglich ein Radarsystem ist bekannt, das zwar den Performance Level bzw. Safety Integrity Level erfüllt, aber erstens sehr teuer ist und deren Frequenzen in vielen Ländern nicht verfügbar sind. Außerdem ist Installation und Betreuung sehr aufwändig. Herkömmliche Laserscannersysteme, basierend auf zwei redundant eingesetzten Laserscannern, konnten die Sicherheitslevel nicht erreichen, und zwar in erster Linie wegen fehlendem Nachweis des Detektionsvermögens der Laserscanner. Zum Beispiel werden schwarze Autos nicht zuverlässig erkannt.

Ausgehend von diesem Stand der Technik ist es Aufgabe der Erfindung, ein verbessertes System zur Absicherung eines Bahnübergangs bereitzustellen, das insbesondere die genannten Sicherheitslevel erfüllen kann.

Diese Aufgabe wird gelöst durch ein System mit den Merkmalen des Anspruchs 1. Das erfindungsgemäße System zur Überwachung eines Bahnübergangs umfasst
- einen Laserscanner, mit einem einen Abtaststrahl erzeugenden Lichtsender und einem Reflexionen des Abtaststrahls an Orten im Sichtbereich empfangenden Lichtempfänger und mit einer Ablenkeinheit, die den Abtaststrahl periodisch ablenkt, so dass dieser den Bahnübergang überstreicht und mit einer Winkelerfassungseinheit zur Erfassung der Winkelstellung der Ablenkeinheit,
- eine Auswerteeinheit, die aus der Lichtlaufzeit zwischen Aussenden des Lichts und Empfangen einer Reflexion eine Entfernung bestimmt und zusammen mit der Winkelstellung den Ort der Reflexion bestimmen kann,
- natürlich vorhandene Objekte im Sichtbereich und in Sichtreichweite des Laserscanners, die eine Referenzkontur bilden und den Sichtbereich begrenzen,
- und in der Auswerteeinheit eine Konturfeldgrenze definierbar ist, die vom Laserscanner aus gesehen vor der Referenzkontur liegt und die ein Konturfeld zwischen der Referenzkontur und der Konturfeldgrenze definiert und das in seiner Form frei definierbar ist,
   wobei der Bahnübergang zwischen dem Laserscanner und dem Konturfeld liegt und
- die Auswerteeinheit ausgebildet ist, ein Sicherheitssignal an einem Sicherheitsausgang auszugeben, wenn vom Laserscanner beim Überstreichen des Bahnübergangs kein Reflexionssignal von der Referenzkontur oder aus dem Konturfeld empfangen wird.

In dem erfindungsgemäßen System ist keinerlei Schutzfeld des Laserscanners definiert und es ist unerheblich, wie gut oder schlecht Objekte vom Laserscanner erkannt werden. Dennoch wird jedes Objekt unabhängig von den Remissionseigenschaften sicher erkannt. Nach der Erfindung werden die Objekte nämlich nicht aufgrund deren diffuser Reflexion der vom Laserscanner ausgesandten Laserstrahlen erkannt. Stattdessen wird die im Sichtbereich befindliche Kontur und ein davor befindliches, in seiner Ausdehnung konfigurierbares Konturfeld verwendet, um ein Objekt indirekt zu detektieren, nämlich durch Ausbleiben einer Reflexion von der Referenzkontur oder von beliebigen Objekten im Konturfeld. Das Konturfeld, das in der tatsächlichen Anwendung je nach Entfernung der Referenzkontur in der Tiefe extrem weit aufgezogen sein kann, hat den Vorteil, dass Fehlauslösungen des Laserscanners, also fehlerhaftes Auslösen des Sicherheitssignals, durch beispielsweise zulässige Objekte zwischen der Referenzkontur und dem Bahnübergang, wirksam vermieden werden. Auch kann die Kontur selber sich verändern, ohne dass das Auswirkungen auf die Sicherheitsfunktionen des Laserscanners hätte, denn solange die Änderungen der Kontur nicht die Konturfeldgrenze verändern, hat das keine Auswirkungen auf die Funktionsweise. Erst wenn sich ein Objekt zwischen dem Konturfeld und dem Laserscanner befindet, erkennt der Laserscanner den Bereich als verletzt, denn das Objekt wird dann einen Teil des Konturfeldes abschatten, wodurch ein Reflexionssignal von der Kontur (unvollständige Kontur) oder aus dem Konturfeld fehlt. Durch dieses fehlende Signal erfolgt also die indirekte Objekterkennung.

Wegen dieser Detektionsstrategie mit Kontur und Konturfeld wird zuverlässig jedes Objekt zwischen dem Konturfeld und Laserscanner erkannt, unabhängig von dessen Remissionseigenschaften. Auch schwarz-glänzende Objekte oder schräg stehende Flächen stellen kein Problem mehr dar.

Des Weiteren führt ein Verlust der Detektion von Objekten aus dem Konturfeld, z.B. wegen Wettereinflüssen oder weil die Oberfläche des Objekts nicht genug Laserlicht reflektiert, nicht zum Verlust der Sicherheit. Das System gibt in diesem Fall dennoch ein Sicherheitssignal aus. Ausgänge können dann abgeschaltet werden (keine Freigabe an übergeordnete Steuerung).

Ein Nachweis des Detektionsvermögens des Systems ist nicht mehr notwendig, denn bei Versagen der Detektion von Objekten (durch das Objekt selbst oder äußere Einflüsse wie Wetter oder dergleichen oder durch sonstige Fehlfunktionen) fällt das System stets auf die sichere Seite aus, es gibt also ein Sicherheitssignal aus. Wenn nicht im ganzen Sichtbereich die Kontur erkannt wird oder zumindest ein Reflexionssignal aus dem Konturfeld kommt, gibt das System keine Freigabe. Dadurch ist der Sicherheit Performance Level d (PLd) bzw. das Safety Integrity Level 3 (SIL3) erreichbar.

In Weiterbildung der Erfindung überstreicht der Abtaststrahl den Bahnübergang im Wesentlichen horizontal und die natürlich vorhandenen Objekte sind durch Gebäude oder sonstige immobile Bebauungen gebildet sind. Die Erfindung macht es also möglich, natürlich Landmarken als Referenzkontur zu nutzen, die bis zur maximalen Sichtweite des Laserscanners, häufig bis zu 100 m, entfernt liegen können. Zusätzliche Referenzmarken sind nicht mehr notwendig.

Wenn in Sichtweite des Laserscanners keine geeigneten Landmarken vorhanden sind, die als Referenzkonturen dienen könnten, ist in Weiterbildung der Erfindung der Abtaststrahl des Laserscanners leicht nach schräg unten gerichtet und die natürlich vorhandenen Objekte sind durch den Boden gebildet. Der stets vorhandene Boden bildet in diesem Fall die Referenzkontur, so dass auch in diesem Fall keine zusätzlich montierten Landmarken notwendig sind.

Vorteilhafterweise liegt die Konturfeldgrenze weit vor der eigentlichen und vom Laserscanner sichtbaren Referenzkontur wobei die Konturfeldgrenze unverändert bleibt, so dass bei Ortsveränderung der Referenzkontur innerhalb des Konturfelds sich keinerlei Änderungen in der Funktionsweise des Laserscanners ergeben. Auf diese Weise können auch temporäre Bauten, wie Baucontainer vor einem Haus als Referenzkontur dienen, und es ist unerheblich, ob der Baucontainer vorhanden ist oder nicht.

In einer weiteren Ausführung der Erfindung setzt sich der Gesamtsichtwinkelbereich aus mehreren unzusammenhängenden Einzelsichtwinkelbereichen zusammen, die in verschiedenen Sichtwinkeln horizontal nebeneinander liegen. Jedem Einzelsichtwinkelbereich ist eine eigene Referenzkontur mit Konturfeld und Konturfeldgrenze zugeordnet. Damit lassen sich größere Flächen mit Lücken überwachen. Diese Ausführungsform kann auch dann sinnvoll sein, wenn die natürlich vorhandenen Objekte nicht zusammenhängend aus Sicht des Laserscanners sind.

Zur Erhöhung der Sicherheit können zwei Laserscanner vorgesehen sein, deren Abtaststrahlen beide den Bahnübergang überstreichen und die beide ein erfindungsgemäßes System aufbauen und deren Auslösebereiche sich in der Vogelperspektive möglichst vollständig überlappen. Mit zwei redundanten erfindungsgemäßen Systemen lassen sich die Anforderungen an das Sicherheit Performance Level d (PLd) bzw. das Safety Integrity Level 3 (SIL3) sehr viel leichter erfüllen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Ansicht eines erfindungsgemäßen Systems mit Bahnübergang von oben;
- Fig. 2 bis 4: schematische Ansichten wie Fig. 1 von weiteren Anwendungssituation;
- Fig. 5: eine schematische Darstellung eines Laserscanners.

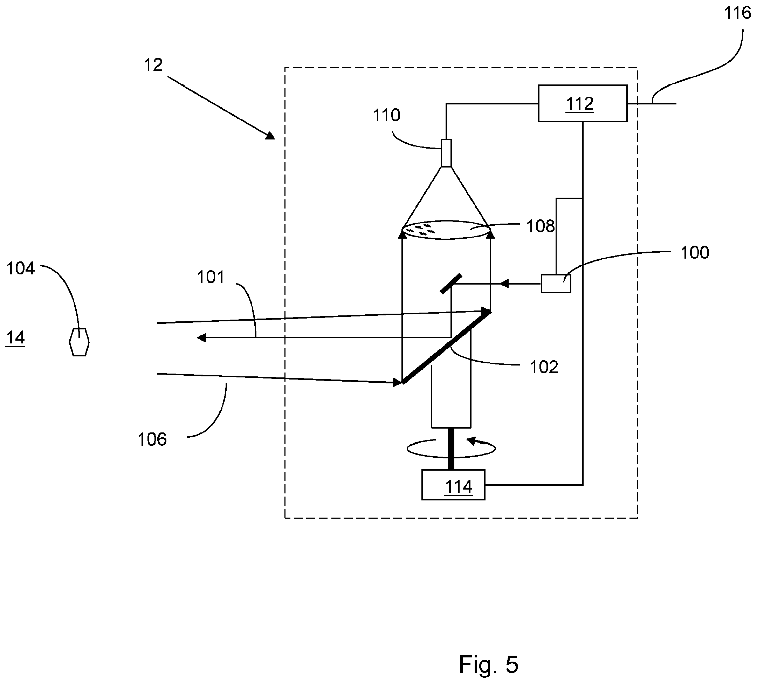

Das erfindungsgemäße System 10 umfasst unter anderem einen Laserscanner 12, der in bekannter Weise aufgebaut ist, wie beispielsweise in oben genannter DE 4340756C2 beschrieben und in Fig. 5 schematisch dargestellt. In einem solchen Laserscanner 12 ist ein Lichtsender 100 zur Aussendung eines Abtaststrahls 101 vorgesehen, der über eine Ablenkeinheit, hier Umlenkspiegel 102, der sich kontinuierlich dreht, in einen Sichtbereich 14 gesandt wird. Der Sichtbereich 14 hat somit eine fächerförmige Ausdehnung. Befindet sich ein Objekt 104 innerhalb des Sichtbereichs 14, wird das vom Objekt 104 reflektierte Licht 106 auf dem gleichen Weg zurückgesandt und von dem Umlenkspiegel 102 über eine Empfangsoptik 108 einem Lichtempfänger 110 zugeführt. In der Regel arbeiten derartige Laserscanner 12 mit kurzen Lichtimpulsen von wenigen nsec, so dass über die Winkelstellung des Umlenkspiegels 102, die mittels einer Winkelerfassungseinheit 114 bestimmt wird und die Laufzeit des Lichtimpulses, der Ort der Reflexion an dem Objekt 104 im Sichtbereich 14 bestimmt werden kann.

Des Weiteren weist der Laserscanner 12 eine Auswerteeinheit 112 auf, der die Empfangssignale des Lichtempfängers zugeführt werden, um die vorgenannte Auswertung zur Bestimmung des Ortes der Reflexion durchzuführen. Die Auswerteeinheit 112 wertet die Information aus und kann davon abhängig ein Sicherheitssignal an einem Sicherheitsausgang 116 ausgeben. Beispielsweise kann ein Not-Halt-Signal an eine Bedienperson über ein Anzeigegerät ausgegeben werden oder direkt eine Zugsignalvorrichtung angesteuert werden. In dem gezeigten Ausführungsbeispiel ist die Auswerteeinheit 112 integraler Bestandteil des Laserscanners 10. Dies muss nicht unbedingt der Fall sein. Die Auswerteeinheit 112 könnte auch in einer separaten Steuerung vorgesehen sein. Ebenso könnte die Auswerteeinheit 112 auch mehrteilig ausgebildet sein.

Das erfindungsgemäße System 10 zur Überwachung eines Bahnübergangs 16 umfasst neben dem Laserscanner 12 natürlich vorhandene Objekte 18 im Sichtbereich 14 und in Sichtreichweite des Laserscanners 10, die eine Referenzkontur 20 bilden und den Sichtbereich 14 begrenzen. Diese natürlich vorhandenen Objekte 18 können Gebäude, immobile Bebauungen, wie Pfosten oder dergleichen Landmarken sein. Sie müssen sich aber insgesamt über den kompletten, relevanten Sichtwinkelbereich 14 des Laserscanners 12 erstrecken und so den Sichtbereich 14 begrenzen.

Weiter umfasst das erfindungsgemäße System 10 eine manuell definierbare Konturfeldgrenze 22, die vom Laserscanner aus gesehen vor der Referenzkontur 20 liegt und die ein Konturfeld 24 zwischen der Referenzkontur 20 und der Konturfeldgrenze 22 definiert. Die Konturfeldgrenze 22 ist in ihrer Form frei definierbar, so dass das Konturfeld 24 einerseits durch die Referenzkontur 20 begrenzt ist und andererseits in Richtung des Laserscanners 10 durch die Konturfeldgrenze 22 begrenzt ist. Dabei ist selbstverständlich klar, dass das Konturfeld 24 sich stets innerhalb des Sichtbereichs 14 befindet, also zur Seite hin durch minimalen und maximalen Sichtwinkel begrenzt ist. In der Regel erfolgt die Definition bzw. Konfiguration der Konturfeldgrenze 22 in der Auswerteeinheit 112.

Die Auswerteeinheit 112 ist weiter ausgebildet, ein Sicherheitssignal an einem Sicherheitsausgang 116 auszugeben, wenn vom Laserscanner 10 beim Überstreichen des Bahnübergangs 16 kein Reflexionssignal von der Referenzkontur 20 oder von Objekten aus dem Konturfeld 24 empfangen wird. Dabei überstreicht der Abtaststrahl 101 den Bahnübergang 16 bevorzugt im Wesentlichen horizontal.

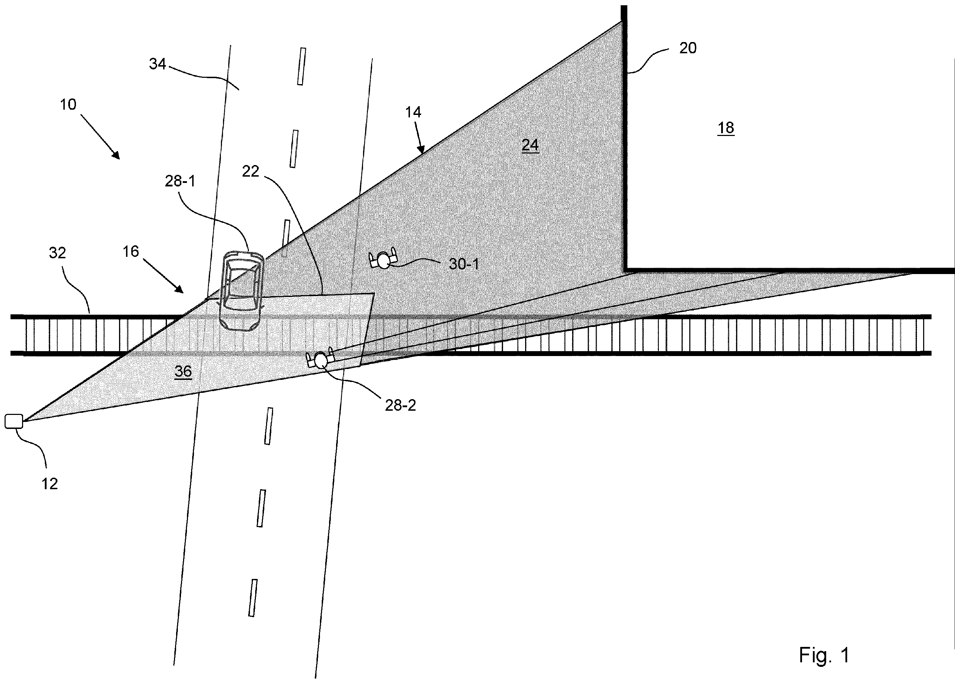

In Fig. 1 ist eine schematische Ansicht einer typischen Anwendungssituation des erfindungsgemäßen Systems 10 in einer Vogelperspektive dargestellt. Ein Bahnübergang 16 soll mit dem erfindungsgemäßen System 10 abgesichert werden, so dass das Vorhandensein von Objekten 28, wie insbesondere Fahrzeuge 28-1 oder auch Menschen 28-2, die sich im Kreuzungsbereich von Bahngleisen 32 und Straße 34 aufhalten, zuverlässig erkannt wird.

Dies geschieht wie folgt. Wenn sich keinerlei Objekte 28 im Sichtbereich 14 befinden, sieht der Laserscanner 12 ausschließlich das natürlich vorhandene Objekt 18 mit seiner Kontur, die als Referenzkontur 20 im Laserscanner hinterlegt ist. Damit ist sichergestellt, dass auch in dem Fall, wenn kein Objekt 28 vorhanden ist, zumindest die Referenzkontur 20 vom Laserscanner 12 gesehen wird. Also im "Gutfall" erhält der Laserscanner 12 aus dem Sichtbereich 14 immer eine Reflexion und damit ein Empfangssignal.

Zusätzlich ist die vorgenannte Konturfeldgrenze 22 in der Auswerteeinheit 112 hinterlegt. Damit ist das Konturfeld 24 definiert, wobei irgendeine Reflexion aus dem Konturfeld 24, beispielsweise von einem im Konturfeld 24 befindlichen Objekt 30-1, erlaubt ist, also zum "Gutfall" zählt. Reflexionen aus dem Konturfeld 24 lösen also nicht das Sicherheitssignal aus.

Bleibt innerhalb der Auflösung des Laserscanners 12 allerdings eine Reflexion aus dem Konturfeld 24 oder von der Referenzkontur 20 aus, so dass der Laserscanner 12 in einem Winkelbereich kein Empfangssignal erhält, dann muss entweder der Fall eingetreten sein, dass das Konturfeld in diesem Winkelbereich durch ein Objekt zwischen Laserscanner 12 und Konturfeldgrenze 22 abgeschattet wurde oder dass eine Fehlfunktion vorliegt. Beides ist ein kritischer Fall und führt zur Auslösung des Sicherheitssignals. Die Abschattung durch ein Objekt 28-2 ist in Fig. 1 schematisch dargestellt. Das Objekt 28-2 befindet sich vor der Konturfeldgrenze 22, so dass eine Reflexion von dem Objekt 28-2 als von außerhalb des Konturfelds 24 kommend erkannt wird. Dabei werden auch die Fälle erfasst, bei der das Objekt 28-2 den Sendelichtstrahl 101 in eine andere Richtung als zurück zum Laserscanner 12 spiegelnd reflektiert oder den Sendelichtstrahl 101 gänzlich absorbiert, so dass in beiden Fällen keine Reflexion zum Laserscanner 12 zurückkommt.

Der Bereich 36 des Sichtbereichs 24 zwischen Laserscanner 12 und Konturfeldgrenze 22 kann somit als Auslösebereich 24 bezeichnet werden, denn jedes Objekt in diesem Auslösebereich 24 löst ein Sicherheitssignal aus, und zwar unabhängig von der Remissionseigenschaft des Objekts (abgesehen von dem Trivialfall von durchsichtigen Objekten, die hier keine Rolle spielen). Die wesentliche Bedeutung für die Funktion des erfindungsgemäßen Systems liegt aber bei dem Konturfeld 24, denn das Sicherheitssignal wird nur dann nicht ausgelöst, wenn über den gesamten Winkelbereich des Sichtbereichs 14 bei jedem Winkelschritt irgendeine Reflexion aus dem Konturfeld 24 bzw. von der Referenzkontur 20 zum Laserscanner 12 zurückkommt.

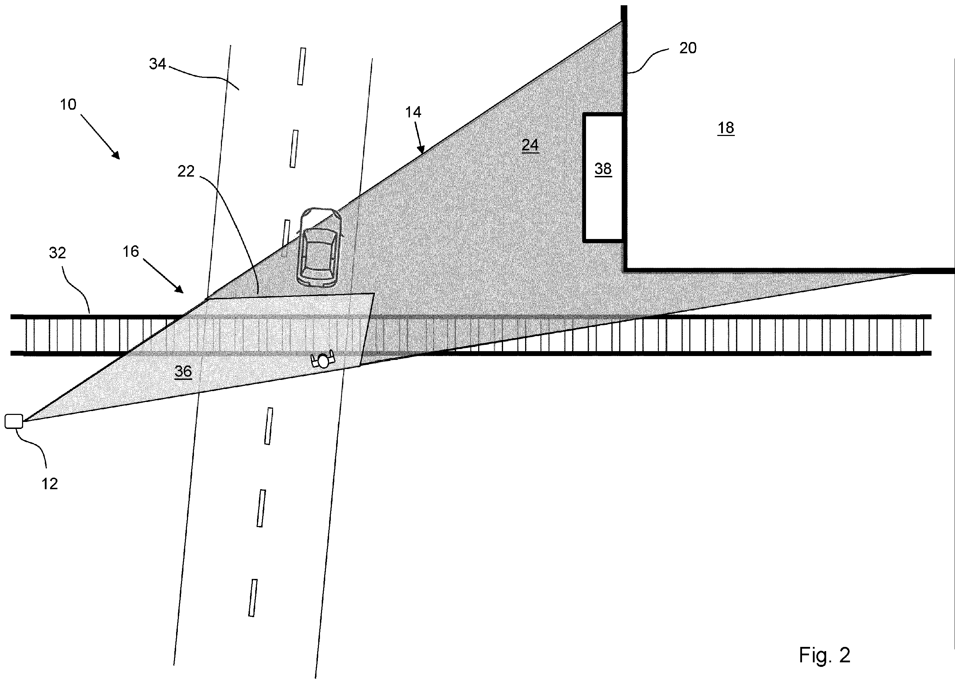

In Fig. 2 ist eine weitere ähnliche Anwendungssituation wie in Fig. 1 dargestellt. In dieser Figur soll gezeigt sein, dass bei einmal definierter und hinterlegter Konturfeldgrenze 22 das weitere "Schicksal" der Referenzkontur unerheblich ist. Die Referenzkontur kann sich also ändern, solange sie im Sichtbereich und Sichtreichweite vom Laserscanner 12 bleibt. Zum Beispiel wenn die Referenzkontur 20 sich in der Art ändert, dass vor dem Gebäude 18 ein Baucontainer 38 aufgestellt wird, dann hat diese Änderung der Referenzkontur 20 keine Auswirkungen auf die Funktionsweise des erfindungsgemäßen Systems 10, da dann der Abtaststrahl 101 vom Baucontainer 38 anstatt von der Referenzkontur 20 reflektiert wird.

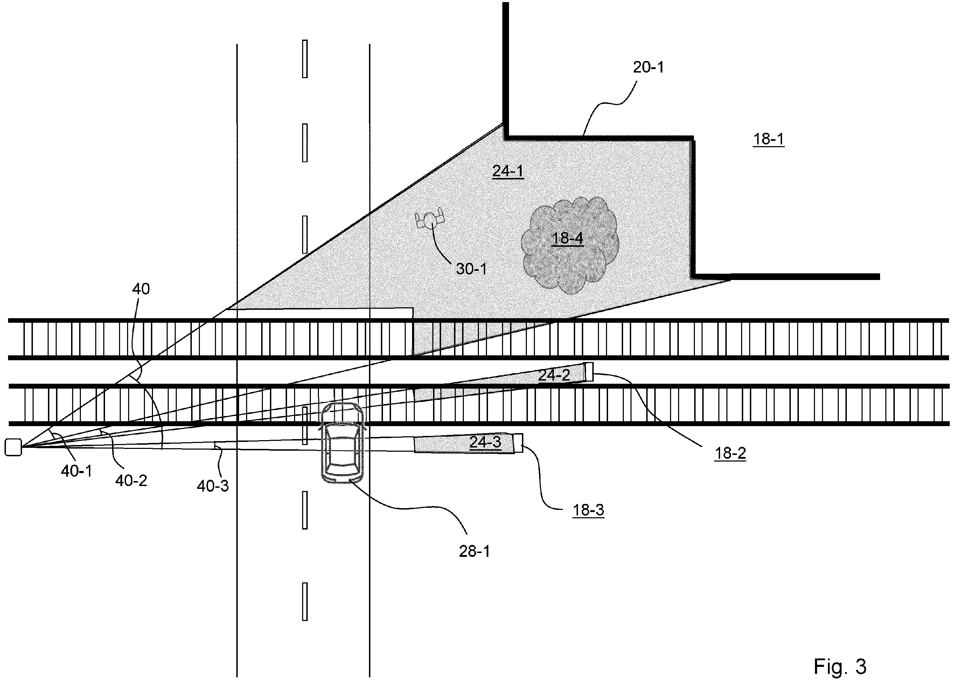

In einer weiteren Ausführung der Erfindung, wie sie in Fig. 3 dargestellt ist, setzt sich der Gesamtsichtwinkelbereich 40 aus mehreren unzusammenhängenden Einzelsichtwinkelbereichen 40-1, 40-2 und 40-3 zusammen, die in verschiedenen Sichtwinkeln horizontal nebeneinander liegen. Jedem Einzelsichtwinkelbereich ist eine eigene Referenzkontur aufgrund eines zugeordneten, natürlich vorhandenen Objekts mit Konturfeld und Konturfeldgrenze zugeordnet. Objekt 18-1 ist beispielsweise ein Gebäude mit einem zugeordneten Konturfeld 24-1. Die Objekte 18-2 und 18-3 können künstlich erstellte Landmarken in Form von Pfosten oder dergleichen sein mit zugeordneten Konturfeldern 24-2 und 24-3. Damit lässt sich insgesamt eine größere Fläche überwachen, wobei Lücken zwischen den einzelnen Sichtwinkelbereichen auftreten. Aber wenn diese Lücken klein genug sind, dass zu erkennende Objekte immer noch erkannt werden, wie beispielsweise ein Fahrzeug 28-1, sind die Lücken akzeptabel. Diese Ausführungsform kann auch dann sinnvoll sein, wenn die natürlich vorhandenen Objekte, hier Gebäude 18-1 und Landmarken 18-2 sowie 18-3, nicht zusammenhängend aus Sicht des Laserscanners sind.

Eine weitere vorteilhafte Besonderheit des erfindungsgemäßen Systems ist ebenfalls in Fig. 3 schematisch dargestellt. Dort ist ein Baum oder Gebüsch oder sonstige Pflanze 18-4 gezeigt, als ein Beispiel, dass auch solche Objekte im Konturfeld 24, hier 24-1, unerheblich sind, denn entweder wird der Sendelichtstrahl von der Pflanze 18-4 selbst oder wenn der Sendelichtstrahl durch Lücken in den Blättern hindurchgeht durch die Referenzkontur 20-1 reflektiert. Auch temporäre Objekte, wie Personen 30-1, sind im Konturfeld problemlos, denn sie liefern eine Reflexion des Abtastlichtstrahls 101 an den Laserscanner 10.

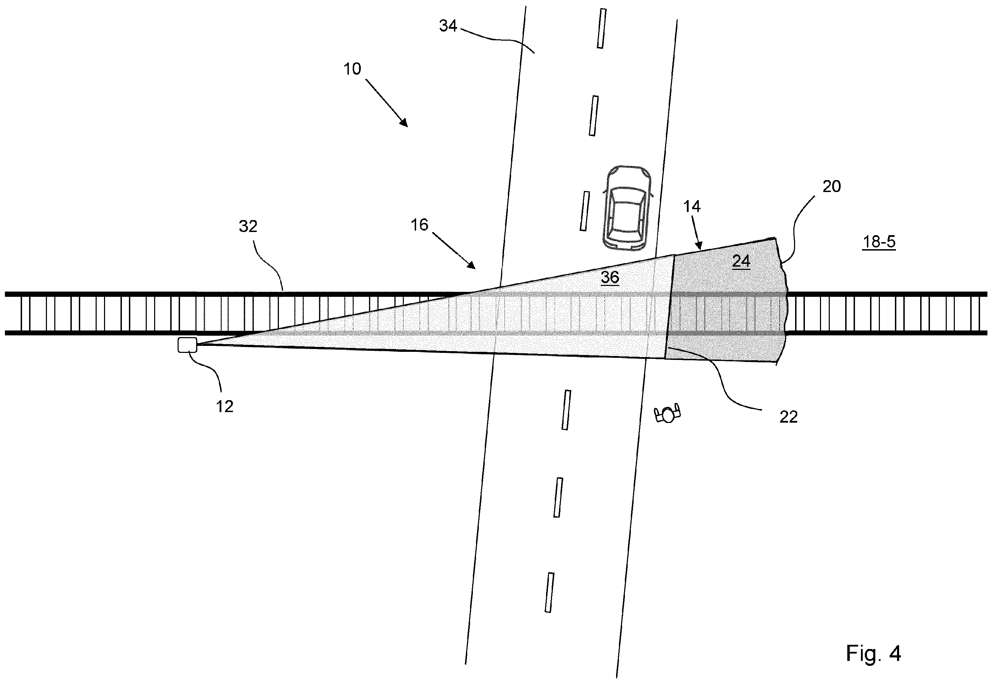

In Fig. 4 ist eine Ausführungsform gezeigt, bei der der Abtaststrahl 101 des Laserscanners 10 leicht nach schräg unten gerichtet ist und die natürlich vorhandenen Objekte 18 durch den Boden 18-5 gebildet sind. Die Referenzkontur 20 ist in diesem Fall die Linie, auf der der Abtaststrahl 101 auf den Boden 18-5 auftritt. Das ist in diesem Beispiel im Wesentlichen das Gleisbett. Genau wie in den Beispielen zuvor ist eine Konturfeldgrenze 22 und damit ein Konturfeld 24 definiert, wobei die Konturfeldgrenze 22 in ausreichendem Abstand zur Referenzkontur 20 liegt, so dass kleinere Bodenunebenheiten im Konturfeld 24 unerheblich sind, ähnlich wie im oben in Fig. 2 erläuterten Fall mit dem Baucontainer. Also auch in diesem Fall, wo keine sich vom Boden erhebenden Landmarken, wie Gebäude oder dergleichen, vorhanden sind, kann das erfindungsgemäße System 10 dennoch eingesetzt werden.

Zur leichteren Erreichung der Sicherheit Performance Level d (PLd) bzw. Safety Integrity Level 3 (SIL3) kann das erfindungsgemäße System redundant vorgesehen sein, wobei jedes der redundanten Systeme nach einer der zuvor beschriebenen Ausführungsformen ausgeführt sein kann. Es sind dann wenigstens zwei Laserscanner vorgesehen, deren Abtaststrahlen beide den Bahnübergang überstreichen und die beide ein erfindungsgemäßes System aufbauen und deren Auslösebereiche sich in der Vogelperspektive möglichst vollständig überlappen. Die Überlappung muss nur in der Vogelperspektive vorliegen, denn die Abtaststrahlen und damit die Scanfelder der Laserscanner können in vertikaler Richtung einen Abstand zueinander aufweisen ohne dass die Funktionsfähigkeit eingeschränkt wäre, da die typischen Objekte, wie Fahrzeuge oder Personen in der Vertikalen stets eine merkliche Ausdehnung haben. Sinnvollerweise sind die Sicherheistsignale der beiden redundanten Systeme "ODER" verknüpft, so dass eine kritische Situation bereits dann angezeigt wird, wenn wenigstens eines der Systeme ein unzulässiges Objekt im Auslösebereich anzeigt.

## Patentansprüche

1. System zur Überwachung eines Bahnübergangs (16) umfassend
- einen Laserscanner (10), mit einem einen Abtaststrahl (101) erzeugenden Lichtsender (100) und einem Reflexionen des Abtaststrahls (101) an Orten im Sichtbereich (14) empfangenden Lichtempfänger (110) und mit einer Ablenkeinheit (102), die den Abtaststrahl (101) periodisch ablenkt, so dass dieser den Bahnübergang (16) überstreicht und mit einer Winkelerfassungseinheit (114) zur Erfassung der Winkelstellung der Ablenkeinheit (102),
- eine Auswerteeinheit (112), die aus der Lichtlaufzeit zwischen Aussenden des Lichts und Empfangen einer Reflexion eine Entfernung bestimmt und zusammen mit der Winkelstellung den Ort der Reflexion bestimmen kann,
- natürlich vorhandene Objekte (18,18-1,18-2,18-3,18-5) im Sichtbereich (14) und in Sichtreichweite des Laserscanners (10), die eine Referenzkontur (20, 20-1, 20-2, 20-3) bilden und den Sichtbereich (14) begrenzen,
**dadurch gekennzeichnet, dass**
- in der Auswerteeinheit (112) eine Konturfeldgrenze (22) definierbar ist, die vom Laserscanner (10) aus gesehen vor der Referenzkontur (20, 20-1, 20-2, 20-3) liegt und die ein Konturfeld (24, 24-1, 24-2, 24-3) zwischen der Referenzkontur (20, 20-1, 20-2, 20-3) und der Konturfeldgrenze (22) definiert und das in seiner Form frei definierbar ist,
wobei der Bahnübergang (16) zwischen dem Laserscanner (10) und dem Konturfeld (24, 24-1, 24-2, 24-3) liegt und
- die Auswerteeinheit (112) ausgebildet ist, ein Sicherheitssignal an einem Sicherheitsausgang (116) auszugeben, wenn vom Laserscanner (10) beim Überstreichen des Bahnübergangs (16) weder ein Reflexionssignal (106) von der Referenzkontur (20, 20-1, 20-2, 20-3) noch ein Reflexionssignal aus dem Konturfeld (24, 24-1, 24-2, 24-3) empfangen wird.

2. System nach Anspruch 1, **dadurch gekennzeichnet, dass** der Abtaststrahl den Bahnübergang im Wesentlichen horizontal überstreicht und die natürlich vorhandenen Objekte durch Gebäude oder sonstige immobile Bebauungen gebildet sind.

3. System nach Anspruch 1, **dadurch gekennzeichnet, dass** der Abtaststrahl des Laserscanners leicht nach schräg unten gerichtet ist und die natürlich vorhandenen Objekte durch den Boden gebildet sind.

4. System nach einem der vorhergehenden Ansprüche, **dadurch gekennzeichnet, dass** die Konturfeldgrenze unverändert bleibt bei Ortsveränderung der Referenzkontur.

5. System nach einem der vorhergehenden Ansprüche, **dadurch gekennzeichnet, dass** zwei Laserscanner vorgesehen sind, deren Abtaststrahlen beide den Bahnübergang überstreichen und die beide ein erfindungsgemäßes System nach einem der vorhergehenden Ansprüche aufbauen und deren Auslösebereiche sich in der Vogelperspektive möglichst vollständig überlappen.

6. System nach einem der vorhergehenden Ansprüche, **dadurch gekennzeichnet, dass** der Gesamtsichtwinkelbereich sich aus mehreren unzusammenhängenden Einzelsichtwinkelbereichen, die in verschiedenen Sichtwinkeln horizontal nebeneinander liegen, zusammensetzt und jedem Einzelsichtwinkelbereich eine zugehörige Referenzkontur mit Konturfeld und Konturfeldgrenze zugeordnet ist.

## Claims

1. A system for monitoring a level crossing (16), said system comprising
- a laser scanner (10) having a light transmitter (100) generating a scanning beam (101) and a light receiver (110) receiving reflections of the scanning beam (101) at locations in the field of view (14) and having a deflection unit (102), which periodically deflects the scanning beam (101) such that it sweeps over the level crossing (16), and having an angle detection unit (114) for detecting the angular position of the deflection unit (102),
- an evaluation unit (112) which determines a distance from the time of flight between the transmission of the light and the reception of a reflection and which can determine the location of the reflection together with the angular position,
- naturally existing objects (18, 18-1, 18-2, 18-3, 18-5) in the field of view (14) and within the range of vision of the laser scanner (10) that form a reference contour (20, 20-1, 20-2, 20-3) and limit the field of view (14), **characterized in that**
- a contour field boundary (22) can be defined in the evaluation unit (112), which contour field boundary (22), viewed from the laser scanner (10), lies in front of the reference contour (20, 20-1, 20-2, 20-3), defines a contour field (24, 24-1, 24-2, 24-3) between the reference contour (20, 20-1, 20-2, 20-3) and the contour field boundary (22) and can be freely defined in terms of its shape,
wherein the level crossing (16) is disposed between the laser scanner (10) and the contour field (24, 24-1, 24-2, 24-3), and
- the evaluation unit (112) is configured to output a safety signal at a safety output (116) if neither a reflection signal (106) from the reference contour (20, 20-1, 20-2, 20-3) nor a reflection signal from the contour field (24, 24-1, 24-2, 24-3) is received by the laser scanner (10) when sweeping over the level crossing (16).

2. A system according to claim 1, **characterized in that** the scanning beam sweeps over the level crossing substantially horizontally and the naturally existing objects are formed by buildings or other immobile structures.

3. A system according to claim 1, **characterized in that** the scanning beam of the laser scanner is directed slightly obliquely downwardly and the naturally existing objects are formed by the ground.

4. A system according to any one of the preceding claims, **characterized in that** the contour field boundary remains unchanged on a location change of the reference contour.

5. A system according to any one of the preceding claims, **characterized in that** two laser scanners are provided whose scanning beams both sweep over the level crossing and which both make up a system in accordance with the invention according to any one of the preceding claims and whose triggering regions overlap as completely as possible in a bird's eye view.

6. A system according to any one of the preceding claims, **characterized in that** the total angle of view range is composed of a plurality of unconnected individual angle of view ranges, which lie horizontally next to one another at different angles of view, and each individual angle of view range is assigned an associated reference contour having a contour field and a contour field boundary.

## Revendications

1. Système de surveillance d'un passage à niveau (16), comprenant
- un scanner laser (10) muni d'un émetteur de lumière (100), générant un faisceau de balayage (101), et d'un récepteur de lumière (110), recevant les réflexions du faisceau de balayage (101) à des endroits situés dans le champ de vision (14), et d'une unité de déviation (102) qui fait dévier périodiquement le faisceau de balayage (101) de manière à ce que celui-ci balaye le passage à niveau (16), et d'une unité de détection d'angle (114) pour détecter la position angulaire de l'unité de déviation (102),
- une unité d'évaluation (112) qui détermine une distance à partir du temps de propagation de la lumière entre l'émission de la lumière et la réception d'une réflexion et qui, conjointement avec la position angulaire, peut déterminer l'endroit de la réflexion,
- des objets naturellement présents (18, 18-1, 18-2, 18-3, 18-5) dans le champ de vision (14) et à portée visuelle du scanner laser (10), qui forment un contour de référence (20, 20-1, 20-2, 20-3) et délimitent le champ de vision (14),
**caractérisé en ce que**
- dans l'unité d'évaluation (112), il est possible de définir une limite de champ de contour (22) qui, vue depuis le scanner laser (10), se trouve devant le contour de référence (20, 20-1, 20-2, 20-3) et qui définit un champ de contour (24, 24-1, 24-2, 24-3) entre le contour de référence (20, 20-1, 20-2, 20-3) et la limite de champ de contour (22) et dont la forme peut être définie librement,
le passage à niveau (16) se trouvant entre le scanner laser (10) et le champ de contour (24, 24-1, 24-2, 24-3), et
- l'unité d'évaluation (112) est conçue pour émettre un signal de sécurité à une sortie de sécurité (116) si, lors du balayage du passage à niveau (16), le scanner laser (10) ne reçoit ni un signal de réflexion (106) provenant du contour de référence (20, 20-1, 20-2, 20-3) ni un signal de réflexion provenant du champ de contour (24, 24-1, 24-2, 24-3).

2. Système selon la revendication 1,
**caractérisé en ce que** le faisceau de balayage balaye le passage à niveau sensiblement à l'horizontale, et les objets naturellement présents sont constitués par des bâtiments ou d'autres constructions immobiles.

3. Système selon la revendication 1,
**caractérisé en ce que** le faisceau de balayage du scanner laser est légèrement incliné vers le bas, et les objets naturellement présents sont constitués par le sol.

4. Système selon l'une des revendications précédentes,
**caractérisé en ce que** la limite de champ de contour reste inchangée lorsque le contour de référence change d'endroit.

5. Système selon l'une des revendications précédentes,
**caractérisé en ce qu'**il est prévu deux scanners laser dont les faisceaux de balayage couvrent tous deux le passage à niveau et qui constituent tous deux un système conforme à l'invention selon l'une des revendications précédentes, et dont les zones de déclenchement se chevauchent le plus possible complètement, à vol d'oiseau.

6. Système selon l'une des revendications précédentes,
**caractérisé en ce que** la plage d'angles de vision totale se compose de plusieurs plages d'angles de vision individuelles non contiguës, qui sont disposées horizontalement les unes à côté des autres dans différents angles de vision, et un contour de référence associé, présentant un champ de contour et une limite de champ de contour, est attribué à chaque plage d'angles de vision individuelle.
